# EUROPEAN PATENT SPECIFICATION

(11) **EP 2 266 334 B1**
(45) Date of publication and mention of the grant of the patent: **26.12.2018**
(21) Application number: 09728383.2
(22) Date of filing: 30.03.2009
(51) Int. Cl.: H04W 12/04, H04L 29/06

(54) **METHODS, APPARATUSES, AND COMPUTER PROGRAM PRODUCTS FOR PROVIDING MULTI-HOP CRYPTOGRAPHIC SEPARATION FOR HANDOVERS**
VERFAHREN, VORRICHTUNGEN UND COMPUTERPROGRAMMPRODUKTE ZUR GEWÄHRLEISTUNG VON MEHRSPRUNG-KRYPTOGRAPHIESEPARATION FÜR HANDOVERS
PROCÉDÉS, APPAREILS ET PRODUITS DE PROGRAMME D'ORDINATEUR POUR FOURNIR UNE SÉPARATION CRYPTOGRAPHIQUE À MULTIPLES SAUTS POUR DES TRANSFERTS

(30) Priority: 04.04.2008 US 42478 P; 10.04.2008 US 43857 P
(43) Date of publication of application: 29.12.2010
(73) Proprietor: Nokia Technologies Oy, 02610 Espoo (FI)
(72) Inventor: FORSBERG, Dan, Lars, Anders, FIN-00210 Helsinki (FI); NIEMI, Pentti Valtteri, 21140 Rymättylä (FI); BLOMMAERT, Marc, B-9140 Temse (BE)
(74) Representative: Papula Oy
(86) International application number: PCT/IB2009/005129
(87) International publication number: WO 2009/122260

(56) References cited:
- US-A1- 2007 224 993
- "3rd Generation Partnership Project; Technical Specification Group Services and System Aspects; Rationale and track of security decisions in Long Term Evolved (LTE) RAN / 3GPP System Architecture Evolution (SAE) (Release 8)" 3GPP TR 33.821 V1.0.0,, [Online] vol. 33.821, no. v1.0.0, 1 December 2007 (2007-12-01), pages 1-116, XP002495037 Retrieved from the Internet: URL:http://www.3gpp.org/ftp/Specs/archive/ 33%5Fseries/33.821/> [retrieved on 2007-12-01]

## Description

### FIELD OF THE INVENTION

Embodiments of the present invention relate generally to wireless communication technology and, more particularly, relate to an apparatus, method and a computer program product for providing cryptographical key separation following a handover.

### BACKGROUND OF THE INVENTION

Current and future networking technologies continue to facilitate ease of information transfer and convenience to users. In order to provide easier or faster information transfer and convenience, telecommunication industry service providers are developing improvements to existing networks. For example, the evolved universal mobile telecommunications system (UMTS) terrestrial radio access network (E-UTRAN) is currently being developed. The E-UTRAN, which is also known as Long Term Evolution (LTE) or 3.9G, is aimed at upgrading prior technologies by improving efficiency, lowering costs, improving services, making use of new spectrum opportunities, and providing better integration with other open standards.

One advantage of E-UTRAN which continues to be shared with other preceding telecommunication standards is the fact that users are enabled to access a network employing such standards while remaining mobile. Thus, for example, users having mobile terminals equipped to communicate in accordance with such standards may travel vast distances while maintaining communication with the network. In this regard, it is currently common for an access point or base station providing network coverage for a particular area (or cell), to pass off communication with a particular mobile terminal to a neighboring base station when the user of the particular mobile terminal exits the coverage area of the base station or may otherwise be more effectively served by the neighboring base station. This process is often referred to as a handover.

One lingering problem with handover in E-UTRAN and other mobile communications networks is the issue of cryptographical key separation between radio access points. In this regard, mobile terminals may communicate encrypted data via radio access points or base stations (referred to as "evolved node-Bs" or "eNBs" in E-UTRAN) using an encryption key known to the mobile terminal and the access point or base station. During handover, an encryption key used by a mobile terminal and its current serving evolved node-B or a derivation of that encryption key may be communicated to a target evolved node-B to which the mobile terminal is to be handed over. The target evolved node-B may then use the encryption key received from the previous evolved node-B. Thus evolved node-Bs which have previously served a mobile terminal may know or otherwise be able to calculate an encryption key currently used by the mobile terminal and its serving evolved node-B and decrypt data communicated between a mobile terminal and the currently serving evolved node-B, thus resulting in a lack of cryptographical key separation security.

3rd Generation Partnership Project; Technical Specification Group Services and System Aspects; Rationale and track of security decisions in Long Term Evolved (LTE) RAN / 3GPP System Architecture Evolution (SAE) (Release 8), 3GPP TR 33.821 V1.0.0, vol. 33.821, no. v1.0.0 1 December 2007 (2007-12-01), pages 1-116, XP002495037 discusses security aspects in LTE.

US patent application US 2007/224993 A1 discloses apparatus, methods and computer program products incorporate improvements that provide enhanced security during handovers in a cellular wireless communications network.

Accordingly, it would be desirable to develop a handover protocol that may provide a degree of cryptographical key separation security so that previous evolved node-Bs may be unable to derive the encryption key used by a mobile terminal and current evolved node-B. It would be further desirable if the handover protocol did not require a significant amount of processing or data transfer overhead by the mobile terminal, evolved node-B, general packet radio service support node (SGSN) (referred to as a "mobility management entity (MME)" in E-UTRAN), or serving gateway (S-GW), so that handover and subsequent resumption of communication is not noticeably delayed.

### BRIEF SUMMARY OF SOME EMBODIMENTS OF THE INVENTION

Methods according to the present invention are characterized by what is presented in claims 1 and 8. Apparatuses according to the present invention are characterized by what is presented in claims 17 and 19. Computer program products according to the present invention are characterized by what is presented in claims 15 and 16.

A method, apparatus and computer program product are also provided that may provide cryptographical key separation for handovers. In this regard, embodiments of the present invention provide cryptographical key separation after two handovers (also known as two 'hops') by configuring an SGSN, also referred to herein as an MME, to provide the target access point with an intermediary key value within the path switch acknowledgement message. Accordingly, target access points may derive a key using a key derivation function that uses the intermediary value as an input parameter to obtain a key that is cryptographically separate from the key used by the source access point. Some embodiments of the invention further send a handover command to user devices that includes an indication of the type of handover, such as, for example, whether the handover is an inter-access point or an intra-access point handover. Accordingly, in some embodiments of the invention, user devices are configured to determine the type of handover based upon the indication included in a handover command and perform key derivations based upon the type of handover. Some embodiments of the invention further use the intermediary key and/or keys derived from the intermediary key to protect the path switch message so that only the source and target radio access points are capable of sending a valid path switch message and thus reduce the risk of any arbitrary radio access point sending false path switch messages. Embodiments of the invention may further provide for cryptographical key separation while reducing or minimizing overhead required of network entities during the handover process as well as reducing or minimizing delay in handover.

In an exemplary embodiment, a method is provided which includes calculating, in response to a handover of a user equipment device from a source access point to a target access point, a key based at least in part upon a previously stored first intermediary value. The method of this embodiment also includes calculating a second intermediary value based at least in part upon the calculated key. The method of this embodiment additionally includes sending a path switch acknowledgement including the second intermediary value to the target access point for use in a subsequent handover of the user equipment device. The method of this embodiment may further include receiving a path switch message including an indication of a cell identification and calculating the encryption key based upon the cell identification. The method of this embodiment may additionally include storing the second intermediary value. In some embodiments, calculating the key may further comprise calculating the key following a radio link handover.

In another exemplary embodiment, a method is provided which includes receiving a handover command from a source access point. The method of this embodiment further includes calculating, in response to receipt of the handover command, a key based at least in part upon a first intermediary value. The method of this embodiment additionally includes calculating a second intermediary value based at least in part upon the first intermediary value. The second intermediary value may be used for calculation of one or more keys in a subsequent handover.

In another exemplary embodiment, an apparatus is provided. The apparatus may include a processor and a memory that stores executable instructions that when executed cause the apparatus to calculate, in response to a handover of a user equipment device from a source access point to a target access point, a key based at least in part upon a previously stored first intermediary value. The executable instructions when executed may also cause the apparatus to calculate a second intermediary value based at least in part upon the calculated key. The executable instructions when executed may further cause the apparatus to send a path switch acknowledgement including the second intermediary value to the target access point for use in a subsequent handover of the user equipment device.

In another exemplary embodiment, an apparatus is provided. The apparatus may include a processor and a memory that stores executable instructions that when executed cause the apparatus to receive a handover command from a source access point. The executable instructions when executed may further cause the apparatus to calculate, in response to receipt of the handover command, a key based at least in part upon a first intermediary value. The executable instructions when executed may additionally cause the apparatus to calculate a second intermediary value based at least in part upon the first intermediary value. The second intermediary value may be used for calculation of one or more keys in a subsequent handover.

In another exemplary embodiment, a computer program product is provided. The computer program product may include at least one computer-readable storage medium having computer-readable program instructions stored therein. The computer-readable program instructions may include a plurality of program instructions. Although in this summary, the program instructions are ordered, it will be appreciated that this summary is provided merely for purposes of example and the ordering is merely to facilitate summarizing the computer program product. The example ordering in no way limits the implementation of the associated computer program instructions. The first program instruction may be configured for calculating, in response to a handover of a user equipment device from a source access point to a target access point, a key based at least in part upon a previously stored first intermediary value. The second program instruction may be configured for calculating a second intermediary value based at least in part upon the calculated key. The third program instruction may be configured for sending a path switch acknowledgement including the second intermediary value to the target access point for use in a subsequent handover of the user equipment device.

In another exemplary embodiment, a computer program product is provided. The computer program product may include at least one computer-readable storage medium having computer-readable program instructions stored therein. The computer-readable program instructions may include a plurality of program instructions. Although in this summary, the program instructions are ordered, it will be appreciated that this summary is provided merely for purposes of example and the ordering is merely to facilitate summarizing the computer program product. The example ordering in no way limits the implementation of the associated computer program instructions. The first program instruction may be configured for receiving a handover command from a source access point. The second program instruction may be configured for calculating, in response to receipt of the handover command, a key based at least in part upon a first intermediary value. The third program instruction may be configured for calculating a second intermediary value based at least in part upon the first intermediary value. The second intermediary value may be used for calculation of one or more keys in a subsequent handover.

In another exemplary embodiment, an apparatus is provided, which includes means for calculating, in response to a handover of a user equipment device from a source access point to a target access point, a key based at least in part upon a previously stored first intermediary value. The apparatus of this embodiment also includes means for calculating a second intermediary value based at least in part upon the calculated key. The apparatus of this embodiment further includes means for sending a path switch acknowledgement including the second intermediary value to the target access point for use in a subsequent handover of the user equipment device.

In another exemplary embodiment, an apparatus is provided, which includes means for receiving a handover command from a source access point. The apparatus of this embodiment further includes means for calculating, in response to receipt of the handover command, a key based at least in part upon a first intermediary value. The apparatus of this embodiment additionally includes means for calculating a second intermediary value based at least in part upon the first intermediary value. The second intermediary value may be used for calculation of one or more keys in a subsequent handover.

The above summary is provided merely for purposes of summarizing some example embodiments of the invention so as to provide a basic understanding of some aspects of the invention. Accordingly, it will be appreciated that the above described example embodiments are merely examples and should not be construed to narrow the scope or spirit of the invention in any way. It will be appreciated that the scope of the invention encompasses many potential embodiments, some of which will be further described below, in addition to those here summarized.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
FIG. 1 is a schematic block diagram of a mobile terminal according to an exemplary embodiment of the present invention;
FIG. 2 is a schematic block diagram of a wireless communications system according to an exemplary embodiment of the present invention;
FIG. 3 is a schematic diagram showing a system for providing cryptographical key separation for handovers according to an exemplary embodiment of the present invention;
FIG. 4 is a control flow diagram of communication signals passed between entities of the exemplary embodiment of FIG. 3 during a handover process according to an exemplary embodiment of the present invention;
FIG. 5 is a flowchart according to an exemplary method of providing cryptographical key separation for handovers according to an exemplary embodiment of the present invention; and
FIG. 6 is a flowchart according to another exemplary method of providing cryptographical key separation for handovers according to an exemplary embodiment of the present invention.

### DETAILED DESCRIPTION OF THE INVENTION

Embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

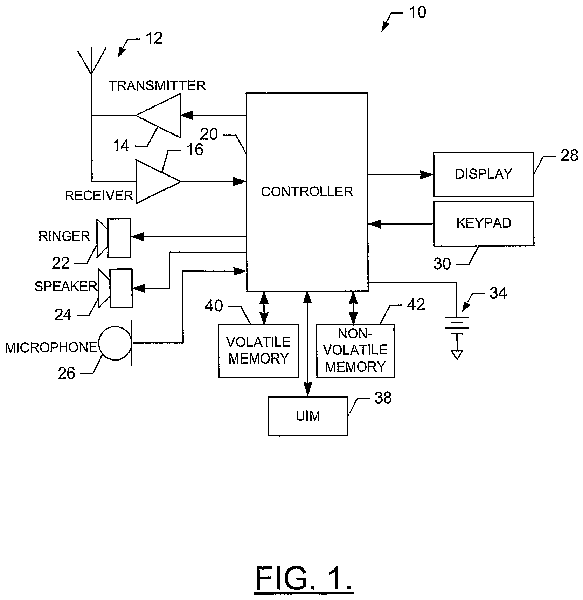

FIG. 1 illustrates a block diagram of a mobile terminal 10 that would benefit from embodiments of the present invention. It should be understood, however, that a mobile telephone as illustrated and hereinafter described is merely illustrative of one type of mobile terminal that would benefit from embodiments of the present invention and, therefore, should not be taken to limit the scope of embodiments of the present invention. While one embodiment of the mobile terminal 10 is illustrated and will be hereinafter described for purposes of example, other types of mobile terminals, such as portable digital assistants (PDAs), pagers, mobile computers, mobile televisions, gaming devices, laptop computers, cameras, video recorders, global positioning system (GPS) devices and other types of voice and text communications systems, may readily employ embodiments of the present invention. Furthermore, devices that are not mobile may also readily employ embodiments of the present invention.

The system and method of embodiments of the present invention will be primarily described below in conjunction with mobile communications applications. However, it should be understood that the system and method of embodiments of the present invention may be utilized in conjunction with a variety of other applications, both in the mobile communications industries and outside of the mobile communications industries.

The mobile terminal 10 of one embodiment includes an antenna 12 (or multiple antennae) in operable communication with a transmitter 14 and a receiver 16. The mobile may terminal 10 further include a controller 20 or other processing element that provides signals to and receives signals from the transmitter 14 and receiver 16, respectively. The signals may include signaling information in accordance with the air interface standard of the applicable cellular system, and also user speech, received data and/or user generated data. In this regard, the mobile terminal 10 may be capable of operating with one or more air interface standards, communication protocols, modulation types, and access types. By way of illustration, the mobile terminal 10 may be capable of operating in accordance with any of a number of first, second, third and/or fourth-generation communication protocols or the like. For example, the mobile terminal 10 may be capable of operating in accordance with second-generation (2G) wireless communication protocols IS-136 (Time Division Multiple Access (TDMA)), Global System for Mobile communications (GSM), and IS-95 (Code Division Multiple Access (CDMA)), or with third-generation (3G) wireless communication protocols, such as Universal Mobile Telecommunications System (UMTS), CDMA2000, Wideband Code Division Multiple Access (WCDMA) and Time Division-Synchronous Code Division Multiple Access (TD-SCDMA), LTE or E-UTRAN, with fourth-generation (4G) wireless communication protocols or the like.

It is understood that the controller 20 of one embodiment includes circuitry desirable for implementing audio and logic functions of the mobile terminal 10. For example, the controller 20 may be comprised of a digital signal processor device, a microprocessor device, and various analog to digital converters, digital to analog converters, and other support circuits. Control and signal processing functions of the mobile terminal 10 may be allocated between these devices according to their respective capabilities. The controller 20 thus may also include the functionality to convolutionally encode and interleave message and data prior to modulation and transmission. The controller 20 may additionally include an internal voice coder, and may include an internal data modem. Further, the controller 20 may include functionality to operate one or more software programs, which may be stored in memory. For example, the controller 20 may be capable of operating a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP) and/or the like, for example.

The mobile terminal 10 may also comprise a user interface including an output device such as a conventional earphone or speaker 24, a ringer 22, a microphone 26, a display 28, and a user input interface, all of which are coupled to the controller 20. The user input interface, which allows the mobile terminal 10 to receive data, may include any of a number of devices allowing the mobile terminal 10 to receive data, such as a keypad 30, a touch display (not shown) or other input device. In embodiments including the keypad 30, the keypad 30 may include the conventional numeric (0-9) and related keys (#, *), and other keys used for operating the mobile terminal 10. Alternatively, the keypad 30 may include a conventional QWERTY keypad arrangement. The keypad 30 may also include various soft keys with associated functions. In addition, or alternatively, the mobile terminal 10 may include an interface device such as a joystick or other user input interface. The mobile terminal 10 may further include a battery 34, such as a vibrating battery pack, for powering various circuits that are required to operate the mobile terminal 10, as well as optionally providing mechanical vibration as a detectable output.

The mobile terminal 10 may further include a user identity module (UIM) 38. In one embodiment, the UIM 38 comprises a memory device having a processor built in. The UIM 38 may include, for example, a subscriber identity module (SIM), a universal integrated circuit card (UICC), a universal subscriber identity module (USIM), a removable user identity module (R-UIM), etc. The UIM 38 may store information elements related to a mobile subscriber. In addition to the UIM 38, the mobile terminal 10 may be equipped with memory. For example, the mobile terminal 10 may include volatile memory 40, such as volatile Random Access Memory (RAM) including a cache area for the temporary storage of data. The mobile terminal 10 may also include other non-volatile memory 42, which may be embedded and/or may be removable. The non-volatile memory 42 may additionally or alternatively comprise an EEPROM, flash memory or the like. The memories may store any of a number of pieces of information, and data, used by the mobile terminal 10 to implement the functions of the mobile terminal 10. For example, the memories may include an identifier, such as an international mobile equipment identification (IMEI) code, capable of uniquely identifying the mobile terminal 10.

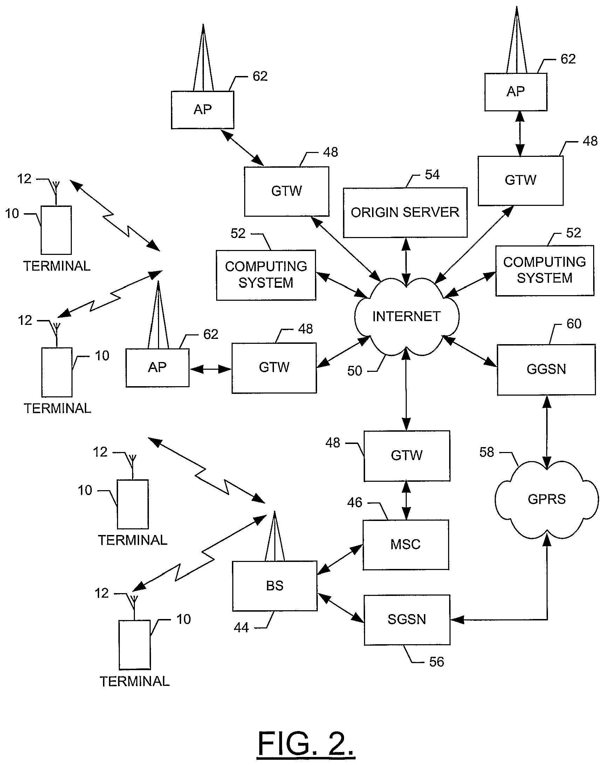

Referring now to FIG. 2, a schematic block diagram of one type of wireless communications system that would benefit from embodiments of the present invention is provided. The system of the illustrated embodiment includes a plurality of network devices. As shown, one or more mobile terminals 10 may each include an antenna 12 for transmitting signals to and for receiving signals from a base site or base station (BS) 44. While a BS may be comprised of one or more cells, reference herein to a BS generically refers to both a BS and a cell of the BS. The base station 44 may be a part of one or more cellular or mobile networks each of which includes elements required to operate the network, such as a mobile switching center (MSC) 46. The mobile network may also be referred to as a Base Station/MSC/Interworking function (BMI). In operation, the MSC 46 of one embodiment is capable of routing calls to and from the mobile terminal 10 when the mobile terminal 10 is making and receiving calls. The MSC 46 may also provide a connection to landline trunks when the mobile terminal 10 is involved in a call. In addition, the MSC 46 may be capable of controlling the forwarding of messages to and from the mobile terminal 10, and may also control the forwarding of messages for the mobile terminal 10 to and from a messaging center. It should be noted that although the MSC 46 is shown in the system of FIG. 2, the MSC 46 is merely an exemplary network device and embodiments of the present invention are not limited to use in a network employing an MSC.

The MSC 46 may be coupled to a data network, such as a local area network (LAN), a metropolitan area network (MAN), and/or a wide area network (WAN). The MSC 46 may be directly coupled to the data network. In one embodiment, however, the MSC 46 is coupled to a gateway device (GTW) 48, and the GTW 48 is coupled to a WAN, such as the Internet 50. In turn, devices such as processing elements (e.g., personal computers, server computers or the like) may be coupled to the mobile terminal 10 via the Internet 50. For example, as explained below, the processing elements may include one or more processing elements associated with a computing system 52 (two shown in FIG. 2), origin server 54 (one shown in FIG. 2) or the like, as described below.

The BS 44 may also be coupled to a serving GPRS (General Packet Radio Service) support node (SGSN) 56. The SGSN 56 of one embodiment is capable of performing functions similar to the MSC 46 for packet switched services. The SGSN 56, like the MSC 46, may be coupled to a data network, such as the Internet 50. The SGSN 56 may be directly coupled to the data network. In another embodiment, however, the SGSN 56 is coupled to a packet-switched core network, such as a GPRS core network 58. The packet-switched core network of this embodiment is then coupled to another GTW 48, such as a gateway GPRS support node (GGSN) 60, and the GGSN 60 is coupled to the Internet 50. In addition to the GGSN 60, the packet-switched core network may also be coupled to a GTW 48. Also, the GGSN 60 may be coupled to a messaging center. In this regard, the GGSN 60 and the SGSN 56, like the MSC 46, may be capable of controlling the forwarding of messages, such as multimedia messaging service (MMS) messages. The GGSN 60 and SGSN 56 may also be capable of controlling the forwarding of messages for the mobile terminal 10 to and from the messaging center.

In addition, by coupling the SGSN 56 to the GPRS core network 58 and the GGSN 60, devices such as a computing system 52 and/or origin server 54 may be coupled to the mobile terminal 10 via the Internet 50, SGSN 56 and GGSN 60. In this regard, devices such as the computing system 52 and/or origin server 54 may communicate with the mobile terminal 10 across the SGSN 56, GPRS core network 58 and the GGSN 60. By directly or indirectly connecting mobile terminals 10 and the other devices (e.g., computing system 52, origin server 54, etc.) to the Internet 50, the mobile terminals 10 may communicate with the other devices and with one another, such as according to the Hypertext Transfer Protocol (HTTP) and/or the like, to thereby carry out various functions of the mobile terminals 10.

Although not every element of every possible mobile network is shown and described herein, it should be appreciated that the mobile terminal 10 may be coupled to one or more of any of a number of different networks through the BS 44. In this regard, the network(s) may be capable of supporting communication in accordance with any one or more of a number of first-generation (1G), second-generation (2G), 2.5G, third-generation (3G), 3.9G, fourth-generation (4G) mobile communication protocols or the like. For example, one or more of the network(s) may be capable of supporting communication in accordance with 2G wireless communication protocols IS-136 (TDMA), GSM, and IS-95 (CDMA). Also, for example, one or more of the network(s) may be capable of supporting communication in accordance with 2.5G wireless communication protocols GPRS, Enhanced Data GSM Environment (EDGE), or the like. Further, for example, one or more of the network(s) may be capable of supporting communication in accordance with 3G wireless communication protocols such as a Universal Mobile Telephone System (UMTS) network employing Wideband Code Division Multiple Access (WCDMA) radio access technology. Additionally, for example, one or more of the network(s) may be capable of supporting communication in accordance with 3.9G wireless communication protocols such as E-UTRAN. Some narrow-band AMPS (NAMPS), as well as Total Access Communication System (TACS), network(s) may also benefit from embodiments of the present invention, as should dual or higher mode mobile terminals (e.g., digital/analog or TDMA/CDMA/analog phones).

The mobile terminal 10 may further be coupled to one or more wireless access points (APs) 62. The APs 62 may comprise access points configured to communicate with the mobile terminal 10 in accordance with techniques such as, for example, radio frequency (RF), infrared (IrDA) or any of a number of different wireless networking techniques, including wireless LAN (WLAN) techniques such as IEEE 802.11 (e.g., 802.11a, 802.11b, 802.11g, 802.11n, etc.), Worldwide Interoperability for Microwave Access (WiMAX) techniques such as IEEE 802.16, and/or wireless Personal Area Network (WPAN) techniques such as IEEE 802.15, BlueTooth (BT), ultra wideband (UWB) and/or the like. The APs 62 may be coupled to the Internet 50. Like with the MSC 46, the APs 62 may be directly coupled to the Internet 50. In one embodiment, however, the APs 62 are indirectly coupled to the Internet 50 via a GTW 48. Furthermore, in one embodiment, the BS 44 may be considered as another AP 62. As will be appreciated, by directly or indirectly connecting the mobile terminals 10 and the computing system 52, the origin server 54, and/or any of a number of other devices, to the Internet 50, the mobile terminals 10 may communicate with one another, the computing system, etc., to thereby carry out various functions of the mobile terminals 10, such as to transmit data, content or the like to, and/or receive content, data or the like from, the computing system 52. As used herein, the terms "data," "content," "information" and similar terms may be used interchangeably to refer to data capable of being transmitted, received and/or stored in accordance with embodiments of the present invention. Thus, use of any such terms should not be taken to limit the spirit and scope of embodiments of the present invention.

Although not shown in FIG. 2, in addition to or in lieu of coupling the mobile terminal 10 to computing systems 52 across the Internet 50, the mobile terminal 10 and computing system 52 may be coupled to one another and communicate in accordance with, for example, RF, BT, IrDA or any of a number of different wireline or wireless communication techniques, including LAN, WLAN, WiMAX, UWB techniques and/or the like. One or more of the computing systems 52 may additionally, or alternatively, include a removable memory capable of storing content, which may thereafter be transferred to the mobile terminal 10. Further, the mobile terminal 10 may be coupled to one or more electronic devices, such as printers, digital projectors and/or other multimedia capturing, producing and/or storing devices (e.g., other terminals). Like with the computing systems 52, the mobile terminal 10 may be configured to communicate with the portable electronic devices in accordance with techniques such as, for example, RF, BT, IrDA or any of a number of different wireline or wireless communication techniques, including universal serial bus (USB), LAN, WLAN, WiMAX, UWB techniques and/or the like.

In an exemplary embodiment, content or data may be communicated over the system of FIG. 2 between a mobile terminal, which may be similar to the mobile terminal 10 of FIG. 1 and a network device of the system of FIG. 2 in order to execute applications for establishing communication between the mobile terminal 10 and other mobile terminals, for example, via the system of FIG. 2. As such, it should be understood that the system of FIG. 2 need not be employed for communication between mobile terminals or between a network device and the mobile terminal, but rather FIG. 2 is merely provided for purposes of example.

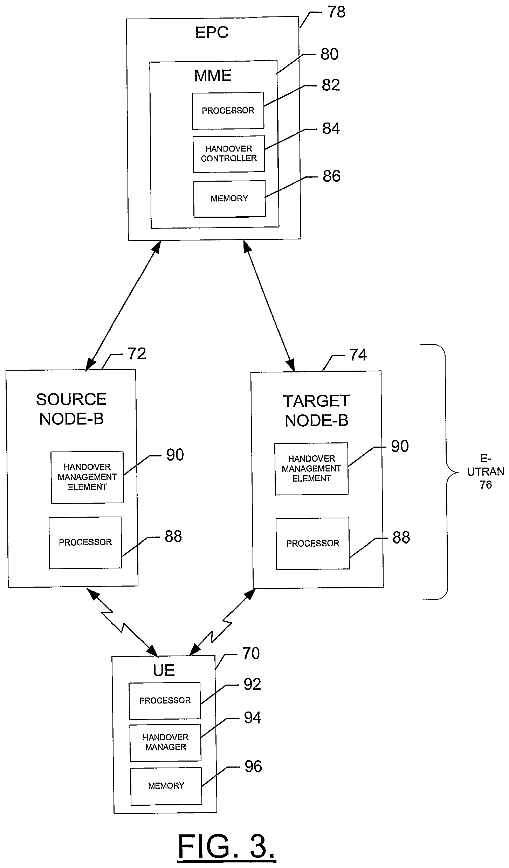

An exemplary embodiment of the invention will now be described with reference to FIG. 3, in which certain elements of a system for facilitating handover failure recovery are displayed. The system of FIG. 3 represents a specific embodiment of a network such as the general network displayed in FIG. 2, except that FIG. 3 represents a general block diagram of an E-UTRAN. As such, in connection with FIG. 3, user equipment (UE) 70 may be exemplary of one embodiment of the mobile terminal 10 of FIG. 1 and source evolved node-B 72 and target evolved node-B 74 may be exemplary of embodiments of either the BS 44 or AP 62 of FIG. 2. Accordingly, although the term "evolved node-B" will be used subsequently, an evolved node-B is merely one embodiment of an access point and the term "access point" may encompass access points, base stations, and evolved node-Bs. Thus, although embodiments of the invention are discussed in relation to E-UTRAN standards, embodiments of the invention are not so limited and may be used with any communications protocol. Further, the system of FIG. 3, may also be employed in connection with a variety of other devices, both mobile and fixed, and therefore, embodiments the present invention should not be limited to application on devices such as the mobile terminal 10 of FIG. 1 or the network devices of FIG. 2.

Referring now to FIG. 3, a schematic block diagram showing a system for providing cryptographical key separation for handovers according to an exemplary embodiment of the present invention is provided. The system includes an E-UTRAN 76 which may include, among other things, a plurality of evolved node-Bs in communication with an evolved packet core (EPC) 78 which may include one or more mobility management entities (MMEs) 80 and one or more system architecture evolution (SAE) gateways. The evolved node-Bs (including source evolved node-B 72 and target evolved node-B 74) may be evolved evolved node-Bs (e.g., eNBs) and may also be in communication with the UE 70 and other UEs.

The evolved node-Bs may provide evolved universal mobile telecommunications system terrestrial radio access (E-UTRA) user plane and control plane (radio resource control (RRC)) protocol terminations for the UE 70. The evolved node-Bs may provide functionality hosting for such functions as radio resource management, radio bearer control, radio admission control, connection mobility control, dynamic allocation of resources to UEs in both uplink and downlink, selection of an MME 80 at UE attachment, Internet Protocol (IP) header compression and encryption, scheduling of paging and broadcast information, routing of data, measurement and measurement reporting for configuration mobility, and the like.

The MME 80 may host functions such as distribution of messages to respective evolved node-Bs, security control, idle state mobility control, SAE bearer control, ciphering and integrity protection of non-access stratum (NAS) signaling, and the like. Although referred to herein as an "MME" in conformance with the E-UTRAN standard, it will be appreciated that embodiments of the invention are not limited to operation in accordance with the E-UTRAN standard and that the MME 80 may also be entities operable with other networking standards. In this regard, the MME 80 may be, for example, an SGSN 56 of the system of FIG. 2. The SAE gateway may host functions such as termination and switching of certain packets for paging and support of UE mobility. In an exemplary embodiment, the EPC 78 may provide connection to a network such as the Internet.

As shown in FIG. 3, each access point, such as, for example, an evolved node-B, may include a processor 88 configured to execute functions associated with each corresponding access point. Such functions may be, for example, associated with stored instructions which when executed by the processor 88 carry out the corresponding functions associated with the instructions. A processor such as those described above may be embodied in many ways. For example, the processor 88 may be embodied as a processor, a coprocessor, a controller or various other processing means or devices including integrated circuits such as, for example, an ASIC (application specific integrated circuit), a field programmable gate array (FPGA) and/or other suitably configured or programmed hardware and/or software elements.

In an exemplary embodiment, each of the evolved node-Bs may also include a handover management element 90. The handover management element 90 may be any device or means embodied in either hardware, a computer program product, or a combination of hardware and software and may be embodied as or otherwise controlled by the processor 88. The handover management element 90 may be configured to determine whether to request a handover with another evolved node-B based, for example, on measurement reports received from the UE 70. In this regard, for example, if measurement reports received at the source evolved node-B 72 indicate the presence of a condition for which a handover is desirable (e.g., low signal strength), the source evolved node-B 72 may send a handover request to the target evolved node-B 74. In an exemplary embodiment of the present invention, the handover management element 90 may be configured to include with the handover request, an encryption key which may be used to facilitate communication with the UE 70. In this regard, the handover management element 90 may be configured to utilize encryption keys received from another network device, such as, for example another evolved node-B or an MME 80, to communicate with a UE 70 and/or to use parameters received from another network device to derive or otherwise calculate encryption keys to use in communications with a UE 70.

The handover management element 90 may further be configured to communicate with an MME 80. In this regard, the handover management element 90 may be configured to receive an initial context setup request message from an MME 80. The context setup request message may include one or more encryption keys, which may facilitate communication with a UE 70, as parameters. The context setup request message may additionally include one or more parameters that may be used by the handover management element to calculate additional encryption keys. The handover management element 90 may additionally be configured to transmit a path switch request to an MME 80 as well as receive from the MME 80 a path switch acknowledgement message which may include one or more parameters that may be used for encryption key derivations. In some embodiments, the handover management element 90 may additionally be configured to protect the path switch message with an intermediary key and/or any keys derived from the intermediary key. The protection may be achieved through any of several means, such as, for example, through integrity protection checksum over the path switch message or through an authentication token calculated based on the intermediary key and/or keys derived from the intermediary key and some additional elements that may be included in the path switch message and/or shared between the target radio access point and the mobility management entity (MME).

The handover management element 90 may further be configured to communicate messages related to a handover with a UE 70. In this regard, the handover management element 90 of a source evolved node-B 72 may be configured to send a handover command to a UE 70, such as in response to a handover decision made based upon measurement reports received from the UE 70. The handover command may include an indicator of whether the handover is an inter-evolved node-B handover. In an exemplary embodiment, this indicator may simply be a 1-bit flag indicator wherein the UE 70 may determine whether the handover is an intra-evolved node-B or inter evolved node-B handover based upon whether the 1-bit flag is set. In alternative embodiments, other means of indication may be used, such as, for example, passing an additional parameter with the handover command message.

An MME 80 may include a processor 82, handover controller 84, and memory 86. The processor 82 may be embodied as a processor, a coprocessor, a controller or various other processing means or devices including integrated circuits such as, for example, an ASIC (application specific integrated circuit), a field programmable gate array(FPGA) and/or other suitably configured or programmed hardware and/or computer program product. The handover controller 84 may be any device or means embodied in either hardware, one or more computer program products, or a combination of hardware and software and may be embodied as or otherwise controlled by the processor 82. The handover controller 84 may be configured to communicate with evolved node-Bs and manage the handover of a UE 70. The handover controller 84 may additionally be configured to communicate with a serving SAE gateway. In this regard, the handover controller 84 may be configured to send U-Plane update requests to a serving gateway and receive U-Plane update responses from a serving gateway.

In an exemplary embodiment, the handover controller 84 may be configured to calculate encryption keys as well as intermediary values that may be used by evolved node-Bs for the derivation of additional encryption keys. The handover controller 84 may be configured to store one or more of these encryption keys and intermediary values in memory 86. The handover controller 84 may be configured to send an initial context setup request message to a source evolved node-B 72. The context setup request message may include as parameters one or more encryption key values which may facilitate communication of the evolved node-B with a UE 70. The context setup request message may additionally or alternatively include one or more intermediary values as parameters that may be used by the evolved node-B to calculate additional encryption keys. The handover controller 84 may further be configured to receive a path switch request from an evolved node-B as well as to send to an evolved node-B a path switch acknowledgement message which may include one or more parameters that may be used by the receiving evolved node-B for encryption key derivations. In some embodiments, the handover controller 84 may be configured to verify a received path switch message to ensure that the path switch message is received from a valid evolved node-B. This verification may be based on, for example, one or more keys, such as, for example, an intermediary key and/or one or more keys derived from the intermediary key.

In an exemplary embodiment, a UE 70 may include a processor 92, a handover manager 94, and memory 86. The processor 92 may be embodied as a processor, a coprocessor, a controller or various other processing means or devices including integrated circuits such as, for example, an ASIC (application specific integrated circuit), a field programmable gate array (FPGA) and/or other suitably configured or programmed hardware and/or software elements. In some embodiments, the processor 92 may be a controller 20 of a mobile terminal 10. The handover manager 94 may be any device or means embodied in either hardware, one or more computer program products, or a combination of hardware and software and may be embodied as or otherwise controlled by the processor 92. In some embodiments, the memory 96 may be volatile memory 40 or non-volatile memory 42 of a mobile terminal 10.

The handover manager 94 may be configured to communicate with source evolved node-B 72 and target evolved node-B 74 and calculate encryption keys to be used in communications with evolved node-Bs so as to facilitate a handover of the UE 70 from a source evolved node-B 72 to a target evolved node-B 74. The handover manager may be configured to send measurement reports to and receive a handover command from source evolved node-B 72. In some embodiments, a received handover command may include an indicator of whether the handover is an inter-evolved node-B handover. The handover manager 94 may then be configured to perform encryption key derivations based upon the received indicator. In this regard, embodiments of the invention disclosed herein may perform one key derivation process if a handover is an inter-evolved node-B handover and another key derivation process if a handover is an intra-evolved node-B handover.

In the event of a radio link failure (RLF), the handover manager 94 may further be configured to receive a radio resource control (RRC) reconfiguration message. The RRC message may include an indicator as to whether the cell to which the UE is to attach is a different evolved node-B from that to which the UE was previously attached. Accordingly, the handover manager 94 may be configured to determine whether the UE is attaching to a new evolved node-B following a radio link failure and to perform intermediate key derivations based upon the determination.

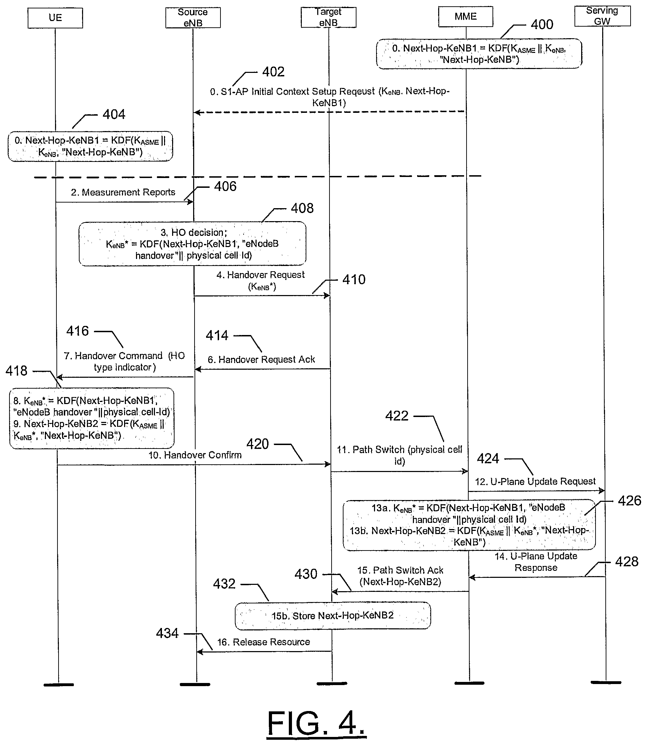

FIG. 4 is a control flow diagram of communication signals passed between entities of the exemplary embodiment of FIG. 3 as well as operations performed by the entities during an inter-evolved node-B handover process according to an exemplary embodiment of the present invention. Operations 400-404 comprise initialization operations which may occur following an initial attachment and/or an idle to active state transition wherein there is no path switch message. These initialization operations may serve to provide intermediate keys and/or other values which may be used to derive encryption and integrity protection keys and to be used after a subsequent handover to derive new intermediate keys. At operation 400, the MME may optionally calculate the intermediate key KeNB if the MME does not already otherwise have access to the key, such as the key being previously calculated and stored in memory. This calculation may be performed using any key derivation function that is known by both the MME and the UE. This key derivation function may use the key KASME and NAS uplink sequence number (SN) as input parameters. KASME is part of a security context and is known by both the MME and the UE after authentication of the subscriber or after having received some security context after an inter-radio technology handover thus having initialized the security context. Similarly the NAS uplink SN is part of this same security context and is known by both the MME and the UE. In this regard, the NAS uplink SN may be determined from the Service Request message in idle to active state transition and/or the reset value 0 after authentication or initialized after handover (HO) from an inter-RAT Handover. Operation 400 may further include calculating an intermediary value which may be used by evolved node-Bs to derive keys. This intermediary value, identified as Next-Hop-KeNB1 in FIG. 4, may be calculated according to any key derivation function that is known by both the MME and UE. The key derivation function may use the values of KASME and KeNB as input parameters. The MME may then send an initial context setup request message, which may include the values of KeNB and Next-Hop-KeNB 1 to the source evolved node-B at operation 402. At operation 404, the UE may optionally calculate the value of KeNB if the UE does not already otherwise have access to the key, such as the key being previously calculated and stored in memory. Operation 404 may further comprise the UE calculating the value of Next-Hop-KeNB1 using the same key derivation function and input parameters as the MME used in step 400. In this regard, KeNB is a key which may be used to facilitate communications between UE and the source evolved node-B. Next-Hop-KeNB1 is an intermediate parameter which may be used to derive the value of a key used to facilitate communications between the UE and a target evolved node-B following a handover. Although not illustrated, operation 404 may further comprise the UE deriving RRC and UP keys from the value of KeNB and/or from subsequent key value derived from this KeNB by predefined key derivation functions.

Operation 406 represents a first operation that may be performed to initiate a handover of a UE from a source evolved node-B to a target evolved node-B. In this regard, the UE may send measurement reports to the source evolved node-B at operation 406. The source evolved node-B may then make a handover decision at operation 408 based upon the measurement reports. For example, the source evolved node-B may make a decision to handover the UE if the measurement reports indicate that the UE may receive a stronger or otherwise more reliable signal from another evolved node-B. Operation 408 may further comprise calculating the encryption key KeNB* using any key derivation function that is also known by the UE. The key derivation function may use the intermediary value Next-Hop-KeNB1 (this intermediary value may be previously provided to the source evolved node-B in an initial context setup request, such as in operation 402, and/or in a path switch acknowledgement message, such as in operation 430), as well as Cell-ID or physical cell ID, which is an indication of the identification of the selected target cell, as input parameters. In an alternative embodiment, however, the key derivation function may not use any indication of the selected target cell as an input parameter. In such an alternative embodiment, the key derivation function may rely solely on the intermediary value Next-Hop-KeNB 1 or may use the intermediary value Next-Hop-KeNB 1 in combination with one or more other known values as input parameters. Operation 410 may comprise the source evolved node-B sending a handover request including the value of KeNB* as a parameter to the target evolved node-B. In this regard, KeNB* is the key that may be used to facilitate communication between the UE and the target evolved node-B.

Operation 414 may comprise the target evolved node-B acknowledging the handover request to the source evolved node-B. The source evolved node-B may then send a handover command to the UE at operation 416. This handover command may include a handover type indicator identifying whether the handover is an inter-evolved node-B handover. In some embodiments, the key derivation process may differ from the processes disclosed herein for intra-evolved node-B handovers. Accordingly, the UE may use the handover type indicator to determine an appropriate key derivation process. In embodiments wherein an indication of the identification of the target cell is used for key derivation functions and Cell-ID is used rather than physical cell ID, the handover command may additionally include an indication of the target Cell-ID.

The UE may then calculate values for KeNB* and Next-Hop-KeNB2 at operation 418. The UE may calculate KeNB* using the same key derivation function and input parameters used by the source evolved node-B at operation 408. Next-Hop-KeNB2 is an intermediary value calculated using the same key derivation function as Next-Hop-KeNB 1 that may be used to calculate intermediate key(s) in a subsequent handover. Accordingly, Next-Hop-KeNB2 may be stored by the UE for use in a subsequent handover process from the target evolved node-B to a third evolved node-B. At operation 420, the UE may send a handover confirmation message to the target evolved node-B.

The target evolved node-B may then send a path switch message to the MME at operation 422. In embodiments, such as illustrated in FIG. 4, wherein an indication of the identification of the target cell is used for key derivation functions and physical cell ID is used rather than Cell-ID, the path switch message may include an indication of the physical cell ID so that the physical cell ID may be determined by the MME from the path switch message. In alternative embodiments wherein no indication of the target cell is used for key derivation function in operations 408, 418, and 426, the path switch message need not include an indication of the physical cell ID. In some embodiments, the path switch message may additionally include a signature key or other means to allow the MME to verify that the path switch message was sent from a valid evolved node-B. This signature key may be, for example, an intermediary value, such as Next-Hop-KeNB 1, and/or keys derived from the intermediary value. Target evolved node-B may determine whether to send the path switch message based upon the handover scenario.

In some embodiments, the target evolved node-B may send the path switch message of operation 422 only if the handover is an inter-evolved node-B handover, such as the handover scenario illustrated in FIG. 4. In an alternative scenario, which is not illustrated in FIG. 4, a handover may be an inter-cell handover but still be a handover wherein the source and target evolved node-Bs are the same (also referred to as an intra-eNB, inter-cell handover). In another alternative scenario, which is not illustrated in FIG. 4, the handover may be an intra-cell handover. Accordingly, in an alternative embodiment, target evolved node-B may be configured to send the path switch message at operation 422 for all inter-cell handovers, i.e., both inter-eNB handovers and intra-eNB, inter-cell handovers. In such an alternative embodiment, the MME may be configured to distinguish inter-cell handovers from intra-cell handovers, such as, for example, based upon changing Cell-ID. In another alternative embodiment, the target evolved node-B may be configured to send the path switch message at operation 422 even for intra-cell handovers. In this alternative embodiment, the MME may be configured to distinguish path switch message retransmissions from intra-cell path switch messages.

Operation 424 may comprise the MME sending a U-Plane update request to the serving gateway. Operation 426 may comprise the MME calculating the value of KeNB* using the same key derivation function and input parameters used by the source evolved node-B at operation 408. Operation 426 may further comprise the MME calculating Next-Hop-KeNB2 using the same key derivation function as used by the UE at operation 418 based upon the values of KASME and KeNB*. The MME may then store Next-Hop-KeNB2 in memory. The serving gateway may then send a U-Plane update response to the MME at operation 428. Operation 430 may comprise the MME sending a path switch acknowledgement to the target evolved node-B. The path switch acknowledgement may include the value of Next-Hop-KeNB2 as a parameter.

The target evolved node-B may then store the value of Next-Hop-KeNB2 in memory at operation 432. In this regard, Next-Hop-KeNB2 may be used by the target evolved node-B as an intermediate parameter to calculate KeNB* in a subsequent handover. The target evolved node-B may then send a message to source evolved node-B at operation 434 releasing source evolved node-B.

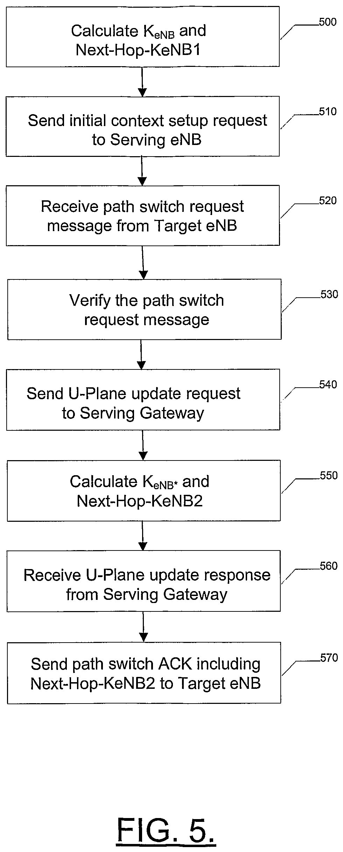

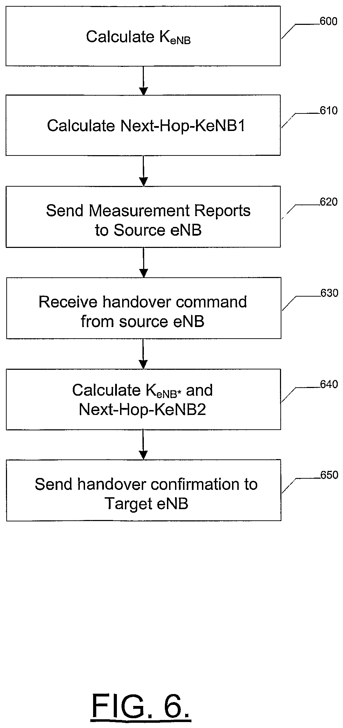

FIGS. 5 and 6 are flowcharts of a system, method and program product according to exemplary embodiments of the invention. It will be understood that each block or step of the flowcharts, and combinations of blocks in the flowcharts, may be implemented by various means, such as hardware, firmware, and/or computer program product including one or more computer program instructions. For example, one or more of the procedures described above may be embodied by a computer program product including computer program instructions. In this regard, the computer program instructions which embody the procedures described above may be stored by a memory device of the mobile terminal and executed by a processor in the mobile terminal and/or a processor of another network entity, such as, for example, an SGSN or MME. As will be appreciated, any such computer program instructions may be loaded onto a computer or other programmable apparatus (i.e., hardware) to produce a machine, such that the instructions stored in memory which execute on the computer or other programmable apparatus create means for implementing the functions specified in the flowcharts block(s) or step(s). These computer program instructions may also be stored in a computer-readable memory that may direct a computer or other programmable apparatus to function in a particular manner, such that the instructions stored in the computer-readable memory produce an article of manufacture including instruction means which implement the function specified in the flowcharts block(s) or step(s). The computer program instructions may also be loaded onto a computer or other programmable apparatus to cause a series of operational steps to be performed on the computer or other programmable apparatus to produce a computer-implemented process such that the instructions stored in memory which execute on the computer or other programmable apparatus provide steps for implementing the functions specified in the flowcharts block(s) or step(s).

Accordingly, blocks or steps of the flowcharts support combinations of means for performing the specified functions, combinations of steps for performing the specified functions and a computer program product including program instructions for performing the specified functions. It will also be understood that one or more blocks or steps of the flowcharts, and combinations of blocks or steps in the flowcharts, may be implemented by special purpose hardware-based computer systems which perform the specified functions or steps, or combinations of special purpose hardware and computer instructions.

FIG. 5 illustrates one embodiment of a method for providing cryptographical key separation for handovers, illustrating operations that may occur at a signaling gateway, such as, for example, an SGSN or a mobility management entity (MME), during a handover process. In this regard, one embodiment of the method illustrated in FIG. 5 includes the MME calculating KeNB and Next-Hop-KeNB1 at operation 500. The MME may then send an initial context setup request that may include KeNB and Next-Hop-KeNB1 to a serving access point, such as a serving evolved node-B, at operation 510. It will be appreciated that operations 500 and 510 comprise optional initialization operations which may occur following an initial attachment and/or an idle to active state transition wherein there is no path switch message. These initialization operations may serve to provide intermediate keys and/or other values which may be used to derive encryption and integrity protection keys and to be used after a subsequent handover to derive new intermediate keys. Accordingly, in some situations, operations 500 and 510 may not occur. This context setup request may include the values of KeNB and Next-Hop-KeNB1 as parameters. At operation 520, the MME may receive a path switch request from a target access point, such as a target evolved node-B. In some embodiments, the, MME may also optionally verify the path switch message based on the Next-Hop-KeNB 1 key and/or keys derived from the Next-Hop-KeNB1 at operation 530. In some embodiments, the path switch request may also include a physical target cell ID. The MME may then send a U-Plane update request to a serving gateway in response to the path switch request at operation 540. Operation 550 may comprise the MME calculating KeNB* and Next-Hop-KeNB2. The MME may then store the value of Next-Hop-KeNB2 in memory. Operation 560 may comprise the MME receiving a U-Plane update response from the serving gateway. The MME may additionally send a path switch acknowledgement including the value of Next-Hop-KeNB2 to the target evolved node-B at operation 570.

FIG. 6 illustrates another exemplary embodiment of a method for providing cryptographical key separation for handovers. In this regard, FIG. 6 illustrates operations which may occur at a UE during a handover process. The method may include calculating KeNB at operation 600. The UE may then calculate Next-Hop-KeNB 1 at operation 610 and send measurement reports to a source access point, such as a source evolved node-B, at operation 620. Operation 630 may comprise the UE receiving a handover command from a source access point, such as a source evolved node-B. The UE may then calculate KeNB* and Next-Hop-KeNB2 at operation 640. The UE may then derive RRC and UP keys from the calculated value of KeNB*. Operation 650 may comprise the UE sending a handover confirmation message to a target access point, such as the target evolved node-B.

The above described functions may be carried out in many ways. For example, any suitable means for carrying out each of the functions described above may be employed to carry out the invention. In one embodiment, all or a portion of the elements of the invention generally operate under control of a computer program product. The computer program product for performing the methods of embodiments of the invention includes a computer-readable storage medium, such as the non-volatile storage medium, and computer-readable program code portions, such as a series of computer instructions, embodied in the computer-readable storage medium.

Accordingly, embodiments of the present invention provide cryptographically separate intermediate keys for handovers after two handovers (also known as 'hops') by configuring the signaling gateway or mobility management entity, such as an MME, to provide the target access point with a Next-Hop-KeNB parameter within a location update acknowledgement/response or binding update acknowledgement/response message, such as, for example, a path switch acknowledgement message. In this regard, deriving a key using a key derivation function that uses both the KASME and Next-Hop-KeNB as input parameters may result in a key that is cryptographically separate from the KeNB used by the source access point. At least some embodiments of the present invention provide cryptographical key separation after two handovers because the path switch acknowledgement message is provided after the radio link handover and thus the source access point provides the key values used by the target access point. However, after an additional handover, the source access point may not calculate the keys that the target access point uses to prepare handover to a subsequent target access point as the values used by the target access point are provided by the MME in the path switch acknowledgement message.

Moreover, embodiments of the present invention may provide cryptographical key separation for handovers with minimal impact to network entities in terms of overhead. In some embodiments, the MME performs an additional key derivation per handover and stores the current Next-Hop-KeNB so that it may use the value of the current Next-Hop-KeNB in a key derivation function to produce a new KeNB and a new Next-Hop-KeNB. A UE, in some embodiments, executes an additional calculation to derive an intermediary value prior to calculating KeNB* values.

Many modifications and other embodiments of the inventions set forth herein will come to mind to one skilled in the art to which these inventions pertain having the benefit of the teachings presented in the foregoing descriptions and the associated drawings. For example, although embodiments of the invention were described in connection with the E-UTRAN standard, embodiments of the invention may be employed with other networks and communication protocols. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method implemented in a mobility management entity (80), the method comprising:
calculating (426), in response to a handover of a user equipment device (70) from a source access point (72) to a target access point (74), a cryptographical key by means of a first function using at least a previously stored first intermediary value as its parameter;
calculating (426) a second intermediary value by means of a second function using at least the calculated cryptographical key as its parameter; and
sending (430) a path switch acknowledgement message including the second intermediary value to the target access point (74) for use in a subsequent handover of the user equipment device (70).

2. The method of claim 1, further comprising:
receiving a path switch message from the target access point (74); and
wherein calculating the cryptographical key comprises calculating the cryptographical key in response to receipt of the path switch message.

3. The method of claim 2, wherein:
receiving a path switch message further comprises receiving a path switch message comprising an indication of a cell identification; and wherein
calculating the cryptographical key comprises calculating the cryptographical key by means of the first function using at least the cell identification and the previously stored first intermediary value as its parameters.

4. The method of claim 2, wherein:
receiving a path switch message further comprises receiving a path switch message that has been protected by the target access point (74) by means of the first function using at least the first intermediary value; and further comprising:
verifying the path switch message based at least in part upon the first intermediary value prior to calculating the cryptographical key.

5. The method of any of claims 1 - 4, wherein calculating the second intermediary value comprises calculating the second intermediary value by means of the second function using at least the calculated cryptographical key, the first intermediary value, and K_{ASME}, wherein the K_{ASME} is part of a security context.

6. The method of any of claims 1 - 5, wherein calculating a cryptographical key comprises calculating the cryptographical key following a radio link handover of the user equipment device (70).

7. The method of any of claims 1 - 6, wherein calculating the second intermediary value comprises a mobility management entity calculating the second intermediary value.

8. A method implemented in a user equipment (70), the method comprising:
receiving, in response to a handover of user equipment device (70) from a source access point (72) to a target access point (74), a handover command from a source access point (72);
calculating (418), in response to receipt of the handover command, a cryptographical key by means of a first function using at least a first intermediary value as its parameter; and
calculating (418) a second intermediary value by means of a second function using at least the cryptographical key as its parameter, wherein the second intermediary value is to be used for calculation of one or more cryptographical keys in a subsequent handover.

9. The method of claim 8, wherein the handover command further comprises an indication of a cell identification; and wherein
calculating the cryptographical key comprises calculating the cryptographical key by means of the first function using at least the cell identification and the first intermediary value as it parameter.

10. The method of any of claims 8 - 9, wherein calculating the second intermediary value comprises calculating the second intermediary value by means of the second function using at least the calculated cryptographical key, the first intermediary value, and K_{ASME}, wherein the K_{ASME} is part of a security context.

11. The method of any of claims 8 - 10, wherein the handover command indicates a handover of a user equipment device from the source access point to a target access point.

12. The method of any of claims 8 - 11, wherein the calculated cryptographical key is used to facilitate communications with a target access point following handover.

13. The method of any of claims 8 - 12, further comprising storing the second intermediary value in a memory.

14. The method of any of claims 8 - 13, wherein calculating the second intermediary value comprises calculating the second intermediary value with a handover manager.

15. A computer program product embodied on a tangible medium and comprising instructions that, when executed by at least one data processor, result in operations according to any of claim 1 to 7.

16. A computer program product embodied on a tangible medium and comprising instructions that, when executed by at least one data processor, result in operations according to any of claims 8 to 14.

17. A mobility management entity (80) comprising:
means for calculating, in response to a handover of a user equipment device (70) from a source access point (72) to a target access point (74), a cryptographical key by means of a first function using at least n a previously stored first intermediary value as its parameter;
means for calculating a second intermediary value by means of a second function using at least the calculated cryptographical key as its parameter; and
means for sending a path switch acknowledgement message including the second intermediary value to the target access point (74) for use in a subsequent handover of the user equipment device.

18. The mobility management entity (80) of claim 17, further configured to perform the method according to any of claims 2 to 7.

19. A user equipment (70)comprising:
means for receiving, in response to a handover of user equipment device (70) from a source access point (72) to a target access point (74), a handover command from a source access point (72);
means for calculating, in response to receipt of the handover command, a cryptographical key by means of a first function using at least a first intermediary value as its parameter; and
means for calculating a second intermediary value by means of a second function using at least the cryptographical key as its parameter, wherein the second intermediary value is to be used for calculation of one or more cryptographical keys in a subsequent handover.

20. The user equipment (70)of claim 19, further configured to perform the method according to any of claims 9 to 14.

## Patentansprüche

1. Verfahren, implementiert in einer Mobilitätsverwaltungsentität (80), das Verfahren umfassend:
Berechnen (426), als Reaktion auf eine Übergabe einer Benutzerausrüstungsvorrichtung (70) von einem Ausgangszugangspunkt (72) zu einem Bestimmungszugangspunkt (74), eines kryptographischen Schlüssels mittels einer ersten Funktion unter Verwendung mindestens eines vorher gespeicherten ersten Zwischenwerts als ihren Parameter;
Berechnen (426) eines zweiten Zwischenwerts mittels einer zweiten Funktion unter Verwendung mindestens des berechneten kryptographischen Schlüssels als ihren Parameter; und
Senden (430) einer Wegwechselbestätigungsnachricht, enthaltend den zweiten Zwischenwert, an den Bestimmungszugangspunkt (74) zur Verwendung in einer anschließenden Übergabe der Benutzerausrüstungsvorrichtung (70).

2. Verfahren nach Anspruch 1, ferner umfassend:
Empfangen der Wegwechselnachricht von dem Bestimmungszugangspunkt (74); und
wobei Berechnen des kryptographischen Schlüssels umfasst, den kryptographischen Schlüssel als Reaktion auf Empfang der Wegwechselnachricht zu berechnen.

3. Verfahren nach Anspruch 2, wobei:
Empfangen der Wegwechselnachricht ferner umfasst, eine Wegwechselnachricht zu empfangen, die eine Angabe einer Zellenkennung umfasst; und wobei
Berechnen des kryptographischen Schlüssels umfasst, den kryptographischen Schlüssel mittels der ersten Funktion unter Verwendung mindestens der Zellenkennung und des vorher gespeicherten ersten Zwischenwerts als ihre Parameter zu berechnen.

4. Verfahren nach Anspruch 2, wobei:
Empfangen einer Wegwechselnachricht ferner umfasst, eine Wegwechselnachricht zu empfangen, die durch den Bestimmungszugangspunkt (74) mittels der ersten Funktion unter Verwendung mindestens des ersten Zwischenwerts geschützt wurde; und ferner umfassend:
Verifizieren der Wegwechselnachricht basierend mindestens teilweise auf dem ersten Zwischenwert vor dem Berechnen des kryptographischen Schlüssels.

5. Verfahren nach einem der Ansprüche 1-4, wobei Berechnen des zweiten Zwischenwerts umfasst, den zweiten Zwischenwert mittels der zweiten Funktion unter Verwendung mindestens des berechneten kryptographischen Schlüssels, des ersten Zwischenwerts und von K_{ASME}, wobei K_{ASME} Teil eines Sicherheitskontexts ist, zu berechnen.

6. Verfahren nach einem der Ansprüche 1-5, wobei Berechnen eines kryptographischen Schlüssels umfasst, den kryptographischen Schlüssel folgend auf eine Funkverbindungsübergabe der Benutzerausrüstungsvorrichtung (70) zu berechnen.

7. Verfahren nach einem der Ansprüche 1-6, wobei Berechnen des zweiten Zwischenwerts umfasst, dass eine Mobilitätsverwaltungsentität den zweiten Zwischenwert berechnet.

8. Verfahren, implementiert in einer Benutzerausrüstung (70), das Verfahren umfassend:
Empfangen, als Reaktion auf eine Übergabe einer Benutzerausrüstungsvorrichtung (70) von einem Ausgangszugangspunkt (72) zu einem Bestimmungszugangspunkt (74), eines Übergabebefehls von einem Ausgangszugangspunkt (72);
Berechnen (418), als Reaktion auf Empfang des Übergabebefehls, eines kryptographischen Schlüssels mittels einer ersten Funktion unter Verwendung mindestens eines ersten Zwischenwerts als ihren Parameter; und
Berechnen (418) eines zweiten Zwischenwerts mittels einer zweiten Funktion unter Verwendung mindestens des kryptographischen Schlüssels als ihren Parameter, wobei der zweite Zwischenwert zur Berechnung eines oder mehrerer kryptographischer Schlüssel in einer anschließenden Übergabe zu verwenden ist.

9. Verfahren nach Anspruch 8, wobei der Übergabebefehl ferner eine Angabe einer Zellenkennung umfasst; und wobei
Berechnen des kryptographischen Schlüssels umfasst, den kryptographischen Schlüssel mittels der ersten Funktion unter Verwendung mindestens der Zellenkennung und des ersten Zwischenwerts als ihren Parameter zu berechnen.

10. Verfahren nach einem der Ansprüche 8-9, wobei Berechnen des zweiten Zwischenwerts umfasst, den zweiten Zwischenwert mittels der zweiten Funktion unter Verwendung mindestens des berechneten kryptographischen Schlüssels, des ersten Zwischenwerts und von K_{ASME}, wobei K_{ASME} Teil eines Sicherheitskontexts ist, zu berechnen.

11. Verfahren nach einem der Ansprüche 8-10, wobei der Übergabebefehl eine Übergabe einer Benutzerausrüstungsvorrichtung von dem Ausgangszugangspunkt zu einem Bestimmungszugangspunkt angibt.

12. Verfahren nach einem der Ansprüche 8-11, wobei der berechnete kryptographische Schlüssel verwendet wird, Kommunikationen mit einem Bestimmungszugangspunkt folgend auf eine Übergabe zu erleichtern.

13. Verfahren nach einem der Ansprüche 8-12, ferner umfassend, den zweiten Zwischenwert in einem Speicher zu speichern.

14. Verfahren nach einem der Ansprüche 8-13, wobei Berechnen des zweiten Zwischenwerts umfasst, den zweiten Zwischenwert mit einer Übergabeverwaltungsvorrichtung zu berechnen.

15. Computerprogrammprodukt, verkörpert in einem materiellen Medium und Anweisungen umfassend, die, wenn sie durch mindestens einen Datenprozessor ausgeführt werden, in Operationen nach einem der Ansprüche 1 bis 7 resultieren.

16. Computerprogrammprodukt, verkörpert in einem materiellen Medium und Anweisungen umfassend, die, wenn sie durch mindestens einen Datenprozessor ausgeführt werden, in Operationen nach einem der Ansprüche 8 bis 14 resultieren.

17. Mobilitätsverwaltungsentität(80), umfassend:
Mittel zum Berechnen, als Reaktion auf eine Übergabe einer Benutzerausrüstungsvorrichtung (70) von einem Ausgangszugangspunkt (72) zu einem Bestimmungszugangspunkt (74), eines kryptographischen Schlüssels mittels einer ersten Funktion unter Verwendung mindestens eines vorher gespeicherten ersten Zwischenwerts als ihren Parameter;
Mittel zum Berechnen eines zweiten Zwischenwerts mittels einer zweiten Funktion unter Verwendung mindestens des berechneten kryptographischen Schlüssels als ihren Parameter; und
Mittel zum Senden einer Wegwechselbestätigungsnachricht, enthaltend den zweiten Zwischenwert, an den Bestimmungszugangspunkt (74) zur Verwendung in einer anschließenden Übergabe der Benutzerausrüstungsvorrichtung.

18. Mobilitätsverwaltungsentität (80) nach Anspruch 17, ferner konfiguriert zum Durchführen des Verfahrens nach einem der Ansprüche 2 bis 7.

19. Benutzerausrüstung (70), umfassend:
Mittel zum Empfangen, als Reaktion auf eine Übergabe einer Benutzerausrüstungsvorrichtung (70) von einem Ausgangszugangspunkt (72) an einen Bestimmungszugangspunkt (74), eines Übergabebefehls von einem Ausgangszugangspunkt (72);
Mittel zum Berechnen, als Reaktion auf Empfang des Übergabebefehls, eines kryptographischen Schlüssels mittels einer ersten Funktion unter Verwendung mindestens eines ersten Zwischenwerts als ihren Parameter; und
Mittel zum Berechnen eines zweiten Zwischenwerts mittels einer zweiten Funktion unter Verwendung mindestens des kryptographischen Schlüssels als ihren Parameter, wobei der zweite Zwischenwert zur Berechnung eines oder mehrerer kryptographischer Schlüssel in einer anschließenden Übergabe zu verwenden ist.

20. Benutzerausrüstung (70) nach Anspruch 19, ferner konfiguriert zum Durchführen des Verfahrens nach einem der Ansprüche 9 bis 14.

## Revendications

1. Procédé mis en oeuvre dans une entité de gestion de la mobilité (80), le procédé comprenant :
le calcul (426) d'une clé cryptographique, en réponse à un transfert de communication d'un dispositif équipement utilisateur (70) depuis un point d'accès source (72) jusqu'à un point d'accès cible (74), au moyen d'une première fonction en utilisant au moins comme paramètre une première valeur intermédiaire précédemment stockée,
le calcul (426) d'une seconde valeur intermédiaire au moyen d'une seconde fonction en utilisant au moins comme paramètre la clé cryptographique calculée, et
l'envoi (430) au point d'accès cible (74) d'un message d'accusé de réception de basculement de voie incluant la seconde valeur intermédiaire en vue d'une utilisation dans un transfert de communication suivant du dispositif équipement utilisateur (70).

2. Procédé selon la revendication 1, comprenant en outre :
la réception d'un message de basculement de voie en provenance du point d'accès cible (74), et
dans lequel le calcul de la clé cryptographique comprend le calcul de la clé cryptographique en réponse à la réception du message de basculement de voie.

3. Procédé selon la revendication 2, dans lequel :
la réception d'un message de basculement de voie comprend en outre la réception d'un message de basculement de voie comportant une indication de l'identification d'une cellule, et dans lequel
le calcul de la clé cryptographique comprend le calcul de la clé cryptographique au moyen de la première fonction en utilisant au moins comme paramètres l'identification de cellule et la première valeur intermédiaire stockée au préalable.

4. Procédé selon la revendication 2, dans lequel :
la réception d'un message de basculement de voie comprend en outre la réception d'un message de basculement de voie qui a été protégé par le point d'accès cible (74) au moyen de la première fonction en utilisant au moins la première valeur intermédiaire ; et comprenant en outre :
la vérification du message de basculement de voie sur la base au moins en partie de la première valeur intermédiaire avant de calculer la clé cryptographique.

5. Procédé selon l'une quelconque des revendications 1 à 4, dans lequel le calcul de la seconde valeur intermédiaire comprend le calcul de la seconde valeur intermédiaire au moyen de la seconde fonction en utilisant au moins la clé cryptographique, la première valeur intermédiaire et le paramètre K_{ASME}, le paramètre K_{ASME} faisant partie d'un contexte de sécurité.

6. Procédé selon l'une quelconque des revendications 1 à 5, dans lequel le calcul d'une clé cryptographique comprend le calcul de la clé cryptographique à la suite d'un transfert de communication sur liaison radio du dispositif équipement utilisateur (70).

7. Procédé selon l'une quelconque des revendications 1 à 6, dans lequel le calcul de la seconde valeur intermédiaire comprend le calcul de la seconde valeur intermédiaire par une entité de gestion de la mobilité.

8. Procédé mis en oeuvre dans un équipement utilisateur (70), le procédé comprenant :
la réception d'une instruction de transfert de communication provenant du point d'accès source (72), en réponse au transfert de communication d'un dispositif équipement utilisateur (70) depuis un point d'accès source (72) jusqu'à un point d'accès cible (74),
le calcul (418) d'une clé cryptographique, en réponse à la réception de l'instruction de transfert de communication, au moyen d'une première fonction en utilisant au moins comme paramètre une première valeur intermédiaire, et
le calcul (418) d'une seconde valeur intermédiaire au moyen d'une seconde fonction en utilisant au moins comme paramètre la clé cryptographique, la seconde valeur intermédiaire devant être utilisée pour le calcul d'une ou plusieurs clés cryptographiques lors d'un transfert de communication suivant.

9. Procédé selon la revendication 8, dans lequel l'instruction de transfert de communication comprend en outre l'indication de l'identification d'une cellule, et dans lequel :
le calcul de la clé cryptographique comprend le calcul de la clé cryptographique au moyen de la première fonction en utilisant comme paramètres au moins l'identification de cellule et la première valeur intermédiaire.

10. Procédé selon l'une quelconque des revendications 8 à 9, dans lequel le calcul de la seconde valeur intermédiaire comprend le calcul de la seconde valeur intermédiaire au moyen de la seconde fonction en utilisant au moins la clé cryptographique calculée, la première valeur intermédiaire et le paramètre K_{ASME}, le paramètre K_{ASME} faisant partie d'un contexte de sécurité

11. Procédé selon l'une quelconque des revendications 8 à 10, dans lequel l'instruction de transfert de communication indique un transfert de communication d'un dispositif équipement utilisateur depuis le point d'accès source jusqu'à un point d'accès cible.

12. Procédé selon l'une quelconque des revendications 8 à 11, dans lequel la clé cryptographique calculée est utilisée pour faciliter des communications avec un point d'accès cible à la suite du transfert de communication.

13. Procédé selon l'une quelconque des revendications 8 à 12, comprenant en outre le stockage de la seconde valeur intermédiaire dans une mémoire.

14. Procédé selon l'une quelconque des revendications 8 à 13, dans lequel le calcul de la seconde valeur intermédiaire comprend le calcul de la seconde valeur intermédiaire avec un gestionnaire de transfert de communication.

15. Produit de programme informatique intégré sur un support tangible et comprenant des instructions qui, lorsqu'elles sont exécutées par au moins un processeur de données, résultent en des opérations conformes à l'une quelconque des revendications 1 à 7.

16. Produit de programme informatique intégré sur un support tangible et comprenant des instructions qui, lorsqu'elles sont exécutées par au moins un processeur de données, résultent en des opérations conformes à l'une quelconque des revendications 8 à 14.

17. Entité de gestion de la mobilité (80) comprenant :
un moyen de calcul d'une clé cryptographique, en réponse à un transfert de communication d'un dispositif équipement utilisateur (70) depuis un point d'accès source (72) jusqu'à un point d'accès cible (74), au moyen d'une première fonction en utilisant au moins comme paramètre une première valeur intermédiaire stockée au préalable,
un moyen de calcul d'une seconde valeur intermédiaire au moyen d'une seconde fonction en utilisant au moins comme paramètre la clé cryptographique calculée, et
un moyen d'envoi au point d'accès cible (74) d'un message d'accusé de réception de basculement de voie incluant la seconde valeur intermédiaire en vue d'une utilisation dans un transfert de communication suivant du dispositif équipement utilisateur.

18. Entité de gestion de la mobilité (80) selon la revendication 17, configuré en outre pour réaliser le procédé conformément à l'une quelconque des revendications 2 à 7.

19. Équipement utilisateur (70) comprenant :
un moyen de réception d'une instruction de transfert de communication provenant du point d'accès source (72), en réponse à un transfert de communication d'un dispositif équipement utilisateur (70) depuis un point d'accès source (72) jusqu'à un point d'accès cible (74),
un moyen de calcul d'une clé cryptographique, en réponse à la réception de l'instruction de transfert de communication, au moyen d'une première fonction en utilisant comme paramètre une première valeur intermédiaire, et
un moyen de calcul d'une seconde valeur intermédiaire au moyen d'une seconde fonction en utilisant comme paramètre au moins la clé cryptographique, la seconde valeur intermédiaire devant être utilisée en vue du calcul d'une ou plusieurs clés cryptographiques lors d'un transfert de communication suivant.

20. Équipement utilisateur (70) selon la revendication 19, configuré en outre pour réaliser le procédé conformément à l'une quelconque des revendications 9 à 14.
